# EUROPÄISCHE PATENTSCHRIFT

(11) **EP 3 757 525 B1**
(45) Veröffentlichungstag und Bekanntmachung des Hinweises auf die Patenterteilung: **03.11.2021**
(21) Anmeldenummer: 19000305.3
(22) Anmeldetag: 24.06.2019
(51) Int. Cl.: G01D 21/00

(54) **SENSOR UND VERFAHREN ZUM BETREIBEN EINES SENSORS**
SENSOR AND METHOD FOR OPERATING SAME
CAPTEUR ET PROCÉDÉ DE FONCTIONNEMENT D'UN CAPTEUR

(43) Veröffentlichungstag der Anmeldung: 30.12.2020
(73) Patentinhaber: Pepperl+Fuchs GmbH, 68307 Mannheim (DE)
(72) Erfinder: DIEHM, Florian, 68307 Mannheim (DE)
(74) Vertreter: Fischer, Uwe

(56) Entgegenhaltungen:
- EP-A1- 1 243 987
- EP-A1- 2 136 322
- EP-A2- 1 655 655
- DE-T5-112012 002 663

## Beschreibung

Die Erfindung bezieht sich auf Sensoren und Verfahren zum Betreiben von Sensoren, insbesondere mit dem Ziel einer Energieoptimierung.

In industriellen Anlagen wird eine Vielzahl von Sensoren eingesetzt, immer häufiger energieautarke Sensoren, die kabellos betrieben werden können. Grundsätzlich ist es eine Aufgabe, den Energiebedarf von Sensoren zu reduzieren, um bei kabelgebundenen Geräten die Anforderungen an die Versorgungseinheiten zu reduzieren und insbesondere bei kabellos betriebenen Sensoren die Betriebsdauer mit stationären Versorgungseinheiten wie z. B. Batterien oder Akkumulatoren zu verlängern. Die Anwendungsgebiete solcher Sensoren reichen von Predictive Maintenance bis hin zur Logistik und bringen unterschiedliche Anforderungen an die Ablaufsteuerung im Sensor mit sich.

Die Druckschrift EP 2 136 322 A1 offenbart ein kollaboratives Bearbeitungsverfahren. Die Druckschrift EP 1 243 987 A1 beschreibt ein Verfahren und eine Anordnung zur Steuerung der Ausführung von Teilaufgaben eines Prozesses. In der Druckschrift DE 11 2012 002 663 T5 sind ein Endgerät, ein Daten-übertragungssystem und ein Verfahren zum Aktivieren eines Endgeräts beschrieben. In der Druckschrift EP 1 655 655 A2 sind ein Prozessorsystem mit Temperatursensor sowie ein Verfahren zum Kontrollieren eines solchen Prozessorsystems offenbart.

Der Erfindung liegt die Aufgabe zugrunde, einen energieoptimierten Sensor anzugeben.

Diese Aufgabe wird erfindungsgemäß durch einen Sensor mit den Merkmalen gemäß Patentanspruch 1 gelöst. Vorteilhafte Ausgestaltungen der erfindungsgemäßen Lösung sind in Unteransprüchen angegeben.

Der Sensor gemäß Patentanspruch 1 ist dadurch gekennzeichnet, dass der Sensor einen Speicher aufweist, in dem vom Sensor zu erledigende Aufgaben abspeicherbar sind, wobei jeder Aufgabe zumindest eine Teilaufgabe und zumindest eine zeitliche Ausführungsvorgabe, insbesondere in Form eines Zeitpunkts oder eines Zeitfensters, zur Ausführung der Aufgabe zugeordnet sind, und der Sensor eine Ablaufsteuerung aufweist, die dazu ausgebildet ist, in dem Speicher abgespeicherte Aufgaben bezüglich einer Kombinierbarkeit zu analysieren und kombinierbare Aufgaben zu identifizieren, indem sie prüft, welche der Aufgaben gemäß der zeitlichen Ausführungsvorgabe zeitlich gleichzeitig, überlappend oder unmittelbar nacheinander ausführbar sind und außerdem identische Teilaufgaben aufweisen, und solche Aufgaben, die beide Kriterien erfüllen, als kombinierbar ansieht, und aus kombinierbaren Aufgaben modifizierte Aufgaben bildet, die die jeweiligen ursprünglichen Aufgaben bei der Ausführung ersetzen, wobei die modifizierten Aufgaben aus den Teilaufgaben der ursprünglichen Aufgaben derart gebildet werden, dass die modifizierten Aufgaben jeweils die Teilaufgaben aller ursprünglichen Aufgaben mit Ausnahme doppelt oder mehrfach auftretender Teilaufgaben aufweisen und am Ende den Sensor in einen Endzustand versetzen, der dem von zumindest einer der ursprünglichen Aufgaben definierten Endzustand entspricht.

Durch die bei dem erfindungsgemäßen Sensor vorgeschlagene Ablaufsteuerung lässt sich die Arbeitsweise der Sensoren in vorteilhafter Weise optimieren und somit Energie einsparen.

Beispielsweise können sich die Anforderungen an die Mess- und Sendehäufigkeiten der Sensoren in unterschiedlichen Anwendungen und Kontexten unterscheiden. Durch die vorgeschlagene Ablaufsteuerung lässt sich eine starre Implementierung der Arbeitsschritte vermeiden und dadurch die Energieeffizienz erhöhen.

Vorteilhaft ist es, wenn die Mess- und Sendehäufigkeit unter Einhaltung vorgegebener Bedingungen angepasst und damit der Energieaufwand reduziert wird.

Ein Ziel der Ablaufsteuerung kann in vorteilhafter Weise darin bestehen, so viele Aufgaben wie möglich zu bündeln. Dabei können anhand der Zeitvorgaben die Aufgaben beispielsweise soweit wie möglich verschoben werden, um aktive Phasen mit erhöhtem Stromverbrauch so gering wie möglich zu halten.

Für jede Aufgabe wird vorzugsweise nur der nächste Ausführungszeitpunkt bestimmt, der durch Verfahren zur Verbesserung des Energieverbrauchs angepasst werden kann. Der Planungshorizont erstreckt sich damit vorzugsweise nur über eine Aktivitätsphase.

Die Ablaufsteuerung bündelt vorzugsweise Aufgaben und führt sie vorzugsweise zeitlich hintereinander aus. Anstelle von zeitlichen und energetischen Optimierungen können vor allem Verbesserungen im Energieverbrauch durch Vermeiden von Redundanzen mittels der Kombination von Aufgaben vorgenommen werden.

Bei der Ausführung eines Aufgabenplans mit verschiedenen Aufgaben in der Ablaufsteuerung des Sensors werden vorzugsweise mehrere Aufgaben oder Aufgabenteile eingespart, kombiniert oder zeitlich gebündelt, um so beispielsweise den Gesamtenergieverbrauch des Sensors zu reduzieren.

Die Veränderung der Aufgabenabarbeitung erfolgt vorzugsweise ohne Verletzung von Zeitvorgaben und stets unter Berücksichtigung von gegenseitigen Abhängigkeiten und Bedingungen zwischen einzelnen Aufgaben.

Weitere Verbesserungen können durch Anpassungen der Ausführungszeitpunkte der Aufgaben und damit der Aktivitätsphasen des Sensors erreicht werden. Auch können gleiche Aufgaben kombiniert und auf eine einmalige Ausführung pro Aktivitätsphase reduziert werden.

Jeder Ablauf in einem Sensor wird vorzugsweise in Form von Aufgaben abgebildet. Eine Aufgabe kann in Teilaufgaben zerlegt werden. Eine Aufgabe besteht demnach vorzugsweise aus mindestens einer Teilaufgabe und gibt die Rahmenbedingungen zur Ausführung der Aufgaben vor. Hierzu können beispielsweise der Ausführungszeitpunkt, eine Angabe darüber, ob die Aufgabe periodisch ausgeführt werden soll und gegebenenfalls die Periode, mit der dies erfolgen soll, zählen.

Eine Teilaufgabe kapselt vorzugsweise eine Prozedur oder Funktion, durch deren Ausführung die eigentliche Aufgabe erfüllt wird. Dies kann beispielsweise ein Kommunikationsaufbau oder die Abfrage eines Sensorwertes sein.

Die Ablaufsteuerung ist vorzugsweise geeignet, die Ausführung von Aufgaben vorzuziehen oder zu verzögern, sofern die der jeweiligen Aufgabe zugeordnete Ausführungsvorgabe dies erlaubt.

Alternativ oder zusätzlich kann in vorteilhafter Weise vorgesehen sein, dass die Ablaufsteuerung derart ausgestaltet ist, dass sie die Ausführung von Aufgaben unter Einhaltung der in den Ausführungsvorgaben der Aufgaben definierten zeitlichen Toleranz vorzieht oder verzögert mit dem Ziel, die modifizierten Aufgaben derart auszubilden, dass die Anzahl der tatsächlich auszuführenden Teilaufgaben minimal wird.

Alternativ oder zusätzlich kann in vorteilhafter Weise vorgesehen sein, dass die Ablaufsteuerung derart ausgestaltet ist, die Ausführung von Aufgaben unter Einhaltung der in den Ausführungsvorgaben definierten Toleranz vorzuziehen oder zu verzögern mit dem Ziel, die Anzahl der modifizierten Aufgaben zu minimieren.

Die Teilaufgaben werden in den modifizierten Aufgaben vorzugsweise zeitlich nacheinander ausgeführt.

Die Reihenfolge der Teilaufgaben in den modifizierten Aufgaben entspricht vorzugsweise jeweils der Reihenfolge in den ursprünglichen Aufgaben.

Vorteilhaft ist es, wenn der Sensor eine Vielzahl an vordefinierten Teilaufgaben zur Auswahl zur Verfügung stellt, die zum Erstellen und zum Abspeichern einer Aufgabe benutzerseitig auswählbar sind.

Der Sensor weist vorzugsweise einen lokalen Energiespeicher, insbesondere eine Batterie oder einen Akkumulator auf und wird von diesem mit Energie versorgt.

Der Sensor kann nach den unterschiedlichsten Wirkprinzipien arbeiten, insbesondere als elektromagnetischer Sensor, Mikrowellen- oder Radarsensor, optischer Sensor, Ultraschallsensor und unterschiedliche physikalische und/oder chemische Größen messen, wie Entfernung, Füllstand, Farbe, Temperatur, pH-Wert oder Stoffkonzentration.

Es ist auch eine Kombination unterschiedlicher Wirkprinzipien in einem Sensor möglich, insbesondere zur Bestimmung unterschiedlicher Größen. Als Beispiel sei genannt, ein Ultraschallsensor zur Entfernungsmessung kombiniert mit einem Temperatursensor.

Die Kommunikation des Sensors mit anderen Einrichtungen erfolgt vorzugsweise kabellos, insbesondere über eine Funkschnittstelle.

Der Sensor umfasst vorzugsweise ein oder mehrere Sensorelemente.

Das oder eines der Sensorelemente ist vorzugsweise ein Sensorelement, das nach einem elektromagnetischen Wirkprinzip arbeitet, und/oder ein Sensorelement, das nach dem induktiven, kapazitiven und/oder magnetischen Prinzip arbeitet.

Auch ist es vorteilhaft, wenn es sich bei dem oder zumindest bei einem der Sensorelemente um
- ein Ultraschallsensorelement,
- ein optischen Sensorelement,
- ein Sensorelement zur Füllstandsmessung,
- ein Abstandssensorelement,
- ein Sensorelement zur Bestimmung des pH-Wertes oder
- ein Sensorelement und/oder zur Bestimmung einer Stoffkonzentration handelt.

Darüber hinaus ist es vorteilhaft, wenn der Sensor mehrere Wirkprinzipien in Kombination anwendet und/oder mehrere physikalische und/oder chemische Größen misst.

Die Erfindung bezieht sich außerdem auf ein Verfahren zur Ablaufsteuerung eines Sensors. Bezüglich eines solchen Verfahrens ist vorgesehen, dass vom Sensor zu erledigende Aufgaben abspeichert werden, wobei jeder Aufgabe zumindest eine Teilaufgabe und zumindest eine zeitliche Ausführungsvorgabe, insbesondere in Form eines Zeitpunkts oder eines Zeitfensters, zur Ausführung der Aufgabe zugeordnet wird, in dem Speicher abgespeicherte Aufgaben bezüglich einer Kombinierbarkeit analysiert und kombinierbare Aufgaben identifiziert werden, indem geprüft wird, welche der Aufgaben gemäß der zeitlichen Ausführungsvorgabe zeitlich gleichzeitig, überlappend oder unmittelbar nacheinander ausführbar sind und außerdem identische Teilaufgaben aufweisen, und solche Aufgaben, die beide Kriterien erfüllen, als kombinierbar angesehen werden, und aus kombinierbaren Aufgaben modifizierte Aufgaben gebildet werden, die die jeweiligen ursprünglichen Aufgaben bei der Ausführung ersetzen, wobei die modifizierten Aufgaben aus den Teilaufgaben der ursprünglichen Aufgaben derart gebildet werden, dass die modifizierten Aufgaben jeweils die Teilaufgaben aller ursprünglichen Aufgaben mit Ausnahme doppelt oder mehrfach auftretender Teilaufgaben aufweisen und am Ende den Sensor in einen Endzustand versetzen, der dem von zumindest einer der ursprünglichen Aufgaben definierten Endzustand entspricht.

Ausführungsbeispiele der Erfindung werden nachfolgend anhand von Figuren beispielhaft näher erläutert. Dabei zeigen beispielhaft
- Figur 1: eine schematische Darstellung eines Sensors,
- Figur 2: eine mögliche Unterteilung einer Aufgabe in Teilaufgaben,
- Figur 3: das Suchen eines gemeinsamen Startzeitpunktes für zwei Aufgaben T1 und T2,
- Figur 4: ein Anpassen der Ausführungszeitpunkte zweier Aufgaben
- Figur 5: eine Kombination gleicher Teilaufgaben (Jn) und Ausführung durch die Ablaufsteuerung
- Figur 6: das Auslassen gegenläufiger Teilaufgaben (KA/KE = Kommunikationsaufbau/-ende, S = Sendevorgang) und das ursprüngliche Verhalten der Zustände A ("nicht verbunden") und B ("verbunden")
- Figur 7: einen zeitlichen Verlauf der Ausführung zweier Aufgaben mit den Teilaufgaben JAmbient und JSend bzw. JSensor und JSend (Um 00:00 Uhr wird die Teilaufgabe JSend zweimal ausgeführt), und
- Figur 8: einen verbesserten Ablauf nach zeitlicher Anpassung und Kombination der Aufgaben

In den Figuren werden der Übersicht halber für identische oder vergleichbare Komponenten stets dieselben Bezugszeichen verwendet.

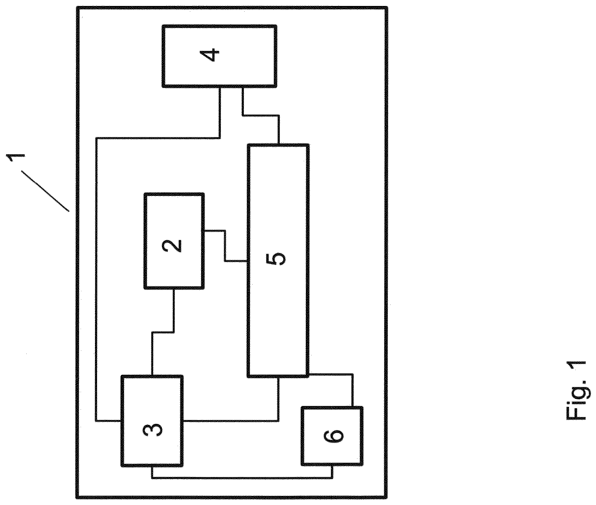

Figur 1 zeigt eine schematische Darstellung eines Sensors 1 mit einem Ausführungsbeispiel für eine erfindungsgemäße Ablaufsteuerung 3. Das Bezugszeichen 2 bezeichnet einen Speicher, das Bezugszeichen 4 eine Messeinrichtung, das Bezugszeichen 5 eine Auswerteeinrichtung und das Bezugszeichen 6 eine Kommunikationseinrichtung. Die Ablaufsteuerung 3 wird vorzugsweise durch eine Recheneinrichtung gebildet, die derart programmiert ist, dass sie die nachfolgend beispielhaft im Detail beschriebenen Arbeitsschritte durchführen kann.

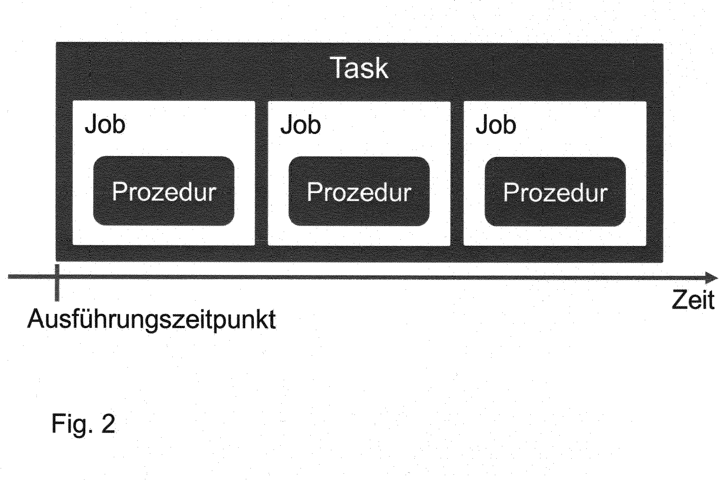

Für eine energieeffiziente Ablaufsteuerung 3 in dem Sensor 1 wird vorzugsweise im Vorfeld festgelegt, dass beispielsweise gleiche Teilaufgaben (in den Figuren 2ff mit den Bezugszeichen Job, J1 bis J4, J_send, J_Ambient, J_Sensor, KA, KE, S1 und S2 gekennzeichnet) in verschiedenen Aufgaben (in den Figuren mit dem Bezugszeichen Task, T1 und T2 gekennzeichnet) auch als gleiche Teilaufgaben definiert werden und welche Aufgaben kombiniert werden können.

Der Ablaufplan besteht vorzugsweise in erster Linie aus der Sammlung der auszuführenden Aufgaben.

Figur 2 zeigt beispielhaft eine Aufgabe Task, die aus mehreren Teilaufgaben Job besteht. Die Teilaufgaben Job können eine oder mehrere Prozeduren umfassen. Als nächstes wird die Ablaufsteuerung hieraus die tatsächliche zeitliche Abfolge der Aufgaben bestimmen. Dazu verwendet sie vordefinierte Ausführungszeitpunkte und -perioden je Aufgabe und die vorher definierten Kombinations- und Einsparungsmöglichkeiten.

Die Ablaufsteuerung kann den Ablauf zur Laufzeit selbstständig verbessern, indem sie Teilaufgaben kombiniert und die Ausführung von Aufgaben beispielsweise so lange wie möglich hinauszögert. Das explizite Festlegen kann zum einen die Komplexität der Ablaufsteuerung verringern, da diese keine semantische Analyse der Aufgaben durchführen muss, um Einsparungspotentiale automatisiert zu erkennen. Zum anderen kann dies die Fehlertoleranz erhöhen, da nur an fest definierten Stellen Einstellungen geändert werden und keine unbeabsichtigten Veränderungen vorgenommen werden.

Welche Aufgaben kombiniert werden können, wird im Vorfeld definiert. Letztlich legt die Ablaufsteuerung fest, ob und wann eine Kombination tatsächlich stattfindet. Eine entscheidende Bedingung ist, dass keine Abhängigkeiten und Bedingungen verletzt werden dürfen, die festgelegt wurden. Dies schließt sowohl die Reihenfolge der Aufgabenausführung als auch den Ausführungszeitpunkt der Aufgaben ein.

Somit können nur Aufgaben kombiniert werden, die zum gleichen Zeitpunkt ausgeführt werden sollen. Dies stellt vorerst einen großen Einschnitt in den Handlungsspielraum der Ablaufsteuerung dar, weshalb die Ausführungszeitpunkte mit Toleranzen versehen sein können.

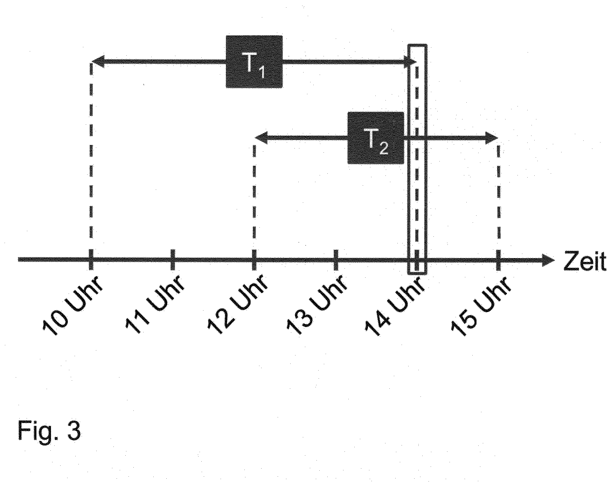

Figur 3 zeigt exemplarisch zwei Aufgaben T1 und T2, die zwischen 10 Uhr und 14 Uhr beziehungsweise zwischen 12 Uhr und 15 Uhr ausgeführt werden sollen. Die Ablaufsteuerung kann zum Zweck der Aufgabenkombination Aufgaben im Rahmen der gewährten Toleranzen zeitlich verzögern oder vorziehen. Hierfür muss zunächst für die kombinierbaren Aufgaben ein gemeinsamer Startzeitpunkt gefunden werden, um im nächsten Schritt die Ausführungszeiten der Aufgaben tatsächlich anzupassen.

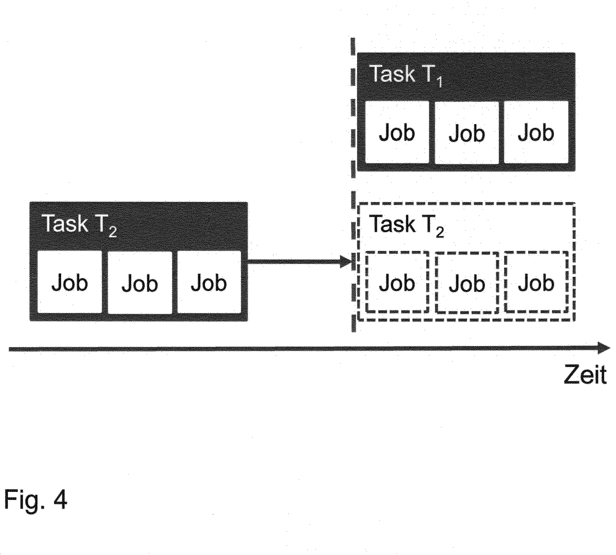

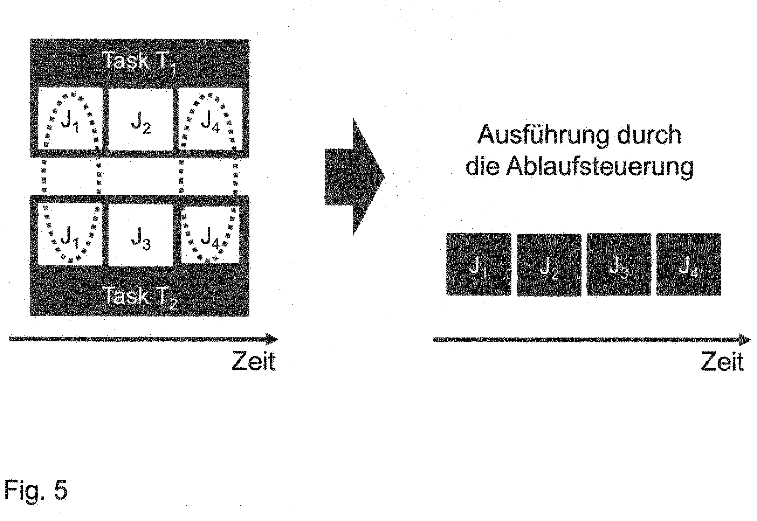

Die Ausführung der beiden Aufgaben T1 und T2 aus Figur 3 erfolgt um 14 Uhr, als spätestmöglicher gemeinsamer Startzeitpunkt. Erst dann können in den nun zeitgleich auszuführenden Aufgaben gleiche und somit redundante Teilaufgaben J1 und J4 ausgelassen werden, wie dies in Figur 4 beispielhaft gezeigt wird. Genau genommen wird nur eine dieser Teilaufgaben J1 und J4 ausgeführt und die anderen Teilaufgaben aufgrund der Redundanz verworfen. Dies wird beispielhaft in Figur 5 gezeigt, wo die Teilaufgaben J1 und J4 je nur einmal durchgeführt werden.

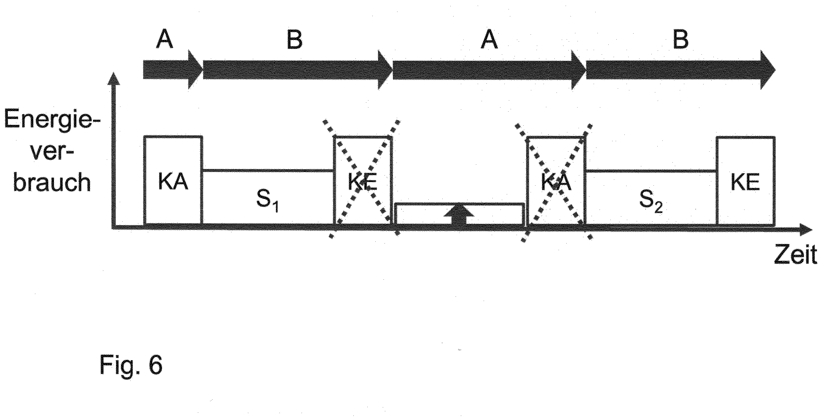

Figur 6 zeigt als weitere Möglichkeit der Kombination von Aufgaben das Auslassen doppelter und funktional gegenläufiger Teilaufgaben. Eine Teilaufgabe "KE" einer ersten Aufgabe kann durch seine Ausführung das System von einem Zustand B in einen Zustand A überführen. Eine andere Teilaufgabe "KA" aus einer zweiten Aufgabe kann genau den gegenteiligen Übergang von Zustand A in Zustand B herbeiführen. Werden diese beiden Teilaufgaben nacheinander ausgeführt, so heben sich deren Effekte für das System auf und können somit ausgelassen werden. Ein Beispiel hierfür ist ein Kommunikationsende, das in der ersten Aufgabe erfolgt und das System von einem "verbunden" in einen "nicht verbunden" Zustand überführt. Ein hierauf folgender Kommunikationsaufbau in der zweiten Aufgabe überführt das System vom Zustand "nicht verbunden" in "verbunden". Effektiver wäre es, die Kommunikation einfach aufrecht zu erhalten, wodurch das System im Zustand "verbunden" (Zustand B) bleibt. Das Auslassen der Teilaufgaben Kommunikationsaufbau/-ende kann nur dann erfolgen, wenn diese Teilaufgaben als funktional gegenläufig definiert wurden, da die Zustandsübergänge des Systems unter Umständen wichtig für die korrekte Funktionsweise des Sensors sein können. Auch für diesen Fall können vorher festgelegte Toleranzen in den Ausführungszeitpunkten der Aufgaben genutzt werden. Der Unterschied ist jedoch, dass für diese Strategie die Aufgaben nicht den gleichen Ausführungszeitpunkt besitzen müssen, sondern auch zeitlich leicht versetzt ausgeführt werden können.

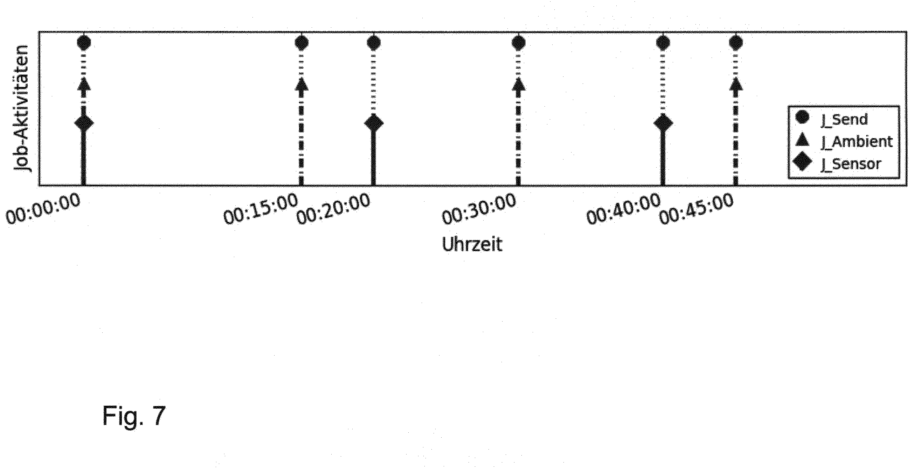

Figur 7 zeigt eine Aufgabe T1, die alle 15 Minuten ausgeführt werden soll. Die Aufgabe T1 besteht aus den beiden Teilaufgaben JAmbient und JSend zum Erfassen der Umgebungsbedingungen des Sensors (Temperatur, Position u.v.m.) und zum Versenden der Daten über eine Kommunikationsschnittstelle. Eine zweite Aufgabe T2 wird alle 20 Minuten ausgeführt. Diese erfasst mit der Teilaufgabe JSensor einen Messwert (z. B. Abstand zu einem Target) und sendet diesen (und weitere verfügbare Messwerte) ebenfalls mit der Teilaufgabe JSend über die Kommunikationsschnittstelle. Den beiden Teilaufgaben soll eine Toleranz von drei Minuten hinsichtlich ihrer Periode gewährt werden. Nach dieser Definition ergibt sich, beginnend um 00:00 Uhr, der in Figur 7 dargestellte Ablauf.

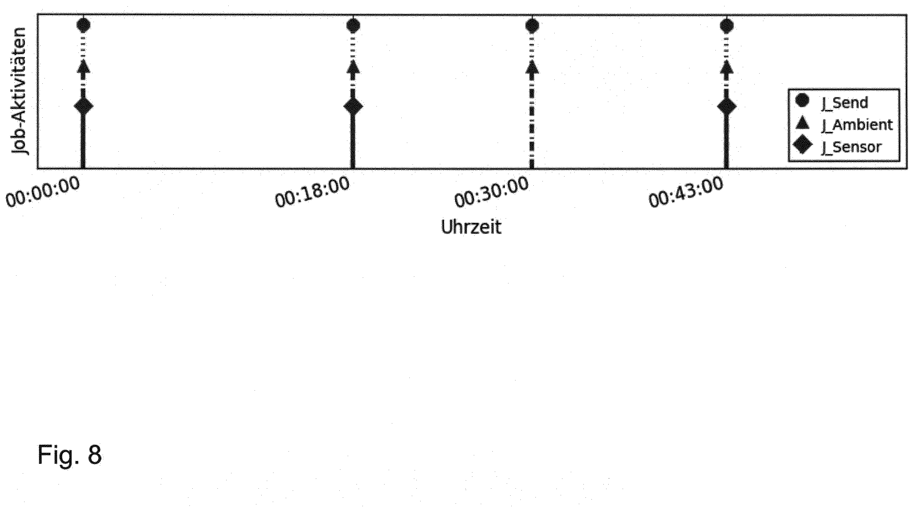

Die Ablaufsteuerung kann aufgrund der gewährten Toleranzen die Ausführung der beiden Aufgaben um 00:15 Uhr und 00:20 Uhr jeweils auf 00:18 Uhr verschieben. Gleiches gilt für die Verschiebung der Ausführungen um 00:40 Uhr und 00:45 Uhr auf 00:43 Uhr. Da die beiden Teilaufgaben nun zum selben Zeitpunkt ausgeführt werden und beide die Teilaufgabe JSend beinhalten, können die Aufgaben hier kombiniert werden. Dadurch wird JSend jeweils nur einmal ausgeführt, sodass die Messwerte in lediglich einem Kommunikationsschritt übertragen werden. Somit ergibt sich ein Ablauf, der in Figur 8 dargestellt ist.

Sowohl vor als auch nach der Verbesserung durch die Ablaufsteuerung werden innerhalb einer Stunde viermal die Umgebungsbedingungen und dreimal ein Messwert mit dem Sensor erfasst. Jedoch kann die Anzahl der Sendevorgänge von sieben auf vier reduziert werden, was einer Reduktion um 43 Prozent entspricht. Hierdurch kann viel Energie gespart werden, da ein Kommunikationsvorgang oftmals sehr energieintensiv ist.

## Patentansprüche

1. Sensor, wobei der Sensor die folgenden Merkmale aufweist:
- einen Speicher, in dem vom Sensor zu erledigende Aufgaben abspeicherbar sind, wobei jeder Aufgabe zumindest eine Teilaufgabe und zumindest eine zeitliche Ausführungsvorgabe, insbesondere in Form eines Zeitpunkts oder eines Zeitfensters, zur Ausführung der Aufgabe zugeordnet sind, und eine Ablaufsteuerung, die dazu ausgebildet ist,
- in dem Speicher abgespeicherte Aufgaben bezüglich einer Kombinierbarkeit zu analysieren und kombinierbare Aufgaben zu identifizieren, indem sie prüft, welche der Aufgaben gemäß der zeitlichen Ausführungsvorgabe zeitlich gleichzeitig, überlappend oder unmittelbar nacheinander ausführbar sind und außerdem identische Teilaufgaben aufweisen, und solche Aufgaben, die beide Kriterien erfüllen, als kombinierbar ansieht, und
- aus kombinierbaren Aufgaben modifizierte Aufgaben bildet, die die jeweiligen ursprünglichen Aufgaben bei der Ausführung ersetzen, wobei die modifizierten Aufgaben aus den Teilaufgaben der ursprünglichen Aufgaben derart gebildet werden, dass die modifizierten Aufgaben jeweils die Teilaufgaben aller ursprünglichen Aufgaben mit Ausnahme doppelt oder mehrfach auftretender Teilaufgaben aufweisen und am Ende den Sensor in einen Endzustand versetzen, der dem von zumindest einer der ursprünglichen Aufgaben definierten Endzustand entspricht.

2. Sensor nach Anspruch 1, wobei die Ablaufsteuerung geeignet ist, die Ausführung von Aufgaben vorzuziehen oder zu verzögern, sofern die der jeweiligen Aufgabe zugeordnete Ausführungsvorgabe dies erlaubt.

3. Sensor nach einem der voranstehenden Ansprüche, wobei die Ablaufsteuerung derart ausgestaltet ist, dass sie die Ausführung von Aufgaben unter Einhaltung der in den Ausführungsvorgaben der Aufgaben definierten zeitlichen Toleranz vorzieht oder verzögert mit dem Ziel, die modifizierten Aufgaben derart auszubilden, dass die Anzahl der tatsächlich auszuführenden Teilaufgaben minimal wird.

4. Sensor nach einem der voranstehenden Ansprüche, wobei die Ablaufsteuerung dazu ausgestaltet ist, die Ausführung von Aufgaben unter Einhaltung der in den Ausführungsvorgaben definierten Toleranz vorzuziehen oder zu verzögern mit dem Ziel, die Anzahl der modifizierten Aufgaben zu minimieren.

5. Sensor nach einem der voranstehenden Ansprüche, wobei die Teilaufgaben in den modifizierten Aufgaben zeitlich nacheinander ausgeführt werden.

6. Sensor nach einem der voranstehenden Ansprüche, wobei die Reihenfolge der Teilaufgaben in den modifizierten Aufgaben jeweils der Reihenfolge in den ursprünglichen Aufgaben entspricht.

7. Sensor nach einem der voranstehenden Ansprüche, wobei der Sensor eine Vielzahl an vordefinierten Teilaufgaben zur Auswahl zur Verfügung stellt, die zum Erstellen und zum Abspeichern einer Aufgabe benutzerseitig auswählbar sind.

8. Sensor nach einem der voranstehenden Ansprüche, wobei
- der Sensor über einen lokalen Energiespeicher, insbesondere eine Batterie oder einen Akkumulator versorgt wird,
- und/oder die Kommunikation kabellos, insbesondere über eine Funkschnittstelle erfolgt.

9. Sensor nach einem der voranstehenden Ansprüche, wobei der Sensor ein nach einem elektromagnetischen Wirkprinzip arbeitender Sensor, insbesondere nach dem induktiven, kapazitiven oder magnetischem Prinzip und/oder ein Ultraschallsensor und/oder ein optischer Sensor ist.

10. Sensor nach einem der voranstehenden Ansprüche, wobei es sich um einen Sensor zur Füllstandsmessung und/oder zur Abstandsbestimmung und/oder zur Bestimmung des pH-Wertes und/oder zur Bestimmung einer Stoffkonzentration handelt.

11. Sensor nach einem der voranstehenden Ansprüche, wobei der Sensor mehrere Wirkprinzipien in Kombination anwendet und/oder mehrere physikalische und/oder chemische Größen misst.

12. Verfahren zum Betreiben eines Sensors nach Anspruch 1, wobei das Verfahren folgende Schritte aufweist:
- vom Sensor werden zu erledigende Aufgaben abgespeichert, wobei jeder Aufgabe zumindest eine Teilaufgabe und zumindest eine zeitliche Ausführungsvorgabe, insbesondere in Form eines Zeitpunkts oder eines Zeitfensters, zur Ausführung der Aufgabe zugeordnet wird,
- in dem Speicher abgespeicherte Aufgaben werden bezüglich ihrer Kombinierbarkeit analysiert und kombinierbare Aufgaben identifiziert, indem geprüft wird, welche der Aufgaben gemäß der zeitlichen Ausführungsvorgabe zeitlich gleichzeitig, überlappend oder unmittelbar nacheinander ausführbar sind und außerdem identische Teilaufgaben aufweisen, und solche Aufgaben, die beide Kriterien erfüllen, als kombinierbar angesehen werden, und
- aus kombinierbaren Aufgaben werden modifizierte Aufgaben gebildet, die die jeweiligen ursprünglichen Aufgaben bei der Ausführung ersetzen, wobei die modifizierten Aufgaben aus den Teilaufgaben der ursprünglichen Aufgaben derart gebildet werden, dass die modifizierten Aufgaben jeweils die Teilaufgaben aller ursprünglichen Aufgaben mit Ausnahme doppelt oder mehrfach auftretender Teilaufgaben aufweisen und am Ende den Sensor in einen Endzustand versetzen, der dem von zumindest einer der ursprünglichen Aufgaben definierten Endzustand entspricht.

## Claims

1. Sensor, wherein the sensor has the following features:
- a memory which can store tasks to be performed by the sensor, wherein each task is assigned at least one subtask and at least one temporal implementation specification, in particular in the form of a point in time or a time window, for implementing the task, and
- a sequence controller which is designed
- to analyze tasks stored in the memory with respect to combinability and to identify combinable tasks by checking which of the tasks can be implemented at the same time, in an overlapping manner or immediately after one another in terms of time according to the temporal implementation specification and also have identical subtasks and regarding those tasks which satisfy both criteria to be combinable, and
- to use combinable tasks to form modified tasks which replace the respective original tasks during implementation, wherein the modified tasks are formed from the subtasks of the original tasks in such a manner that the modified tasks each have the subtasks of all original tasks, with the exception of subtasks that occur twice or several times, and, at the end, change the sensor to a final state which corresponds to the final state defined by at least one of the original tasks.

2. Sensor according to Claim 1, wherein the sequence controller is suitable for bringing forward or delaying the implementation of tasks if the implementation specification assigned to the respective task allows this.

3. Sensor according to one of the preceding claims, wherein the sequence controller is configured in such a manner that it brings forward or delays the implementation of tasks, while complying with the temporal tolerance defined in the implementation specifications of the tasks, with the aim of forming the modified tasks in such a manner that the number of subtasks to be actually implemented becomes minimal.

4. Sensor according to one of the preceding claims, wherein the sequence controller is configured to bring forward or delay the implementation of tasks, while complying with the tolerance defined in the implementation specifications, with the aim of minimizing the number of modified tasks.

5. Sensor according to one of the preceding claims, wherein the subtasks in the modified tasks are implemented in temporal succession.

6. Sensor according to one of the preceding claims, wherein the sequence of subtasks in the modified tasks corresponds in each case to the sequence in the original tasks.

7. Sensor according to one of the preceding claims, wherein the sensor provides a multiplicity of predefined subtasks for selection which can be selected by the user for the purpose of creating and storing a task.

8. Sensor according to one of the preceding claims, wherein
- the sensor is supplied via a local energy store, in particular a battery or a rechargeable battery,
- and/or communication takes place wirelessly, in particular via a radio interface.

9. Sensor according to one of the preceding claims, wherein the sensor is a sensor operating according to an electromagnetic operating principle, in particular according to the inductive, capacitive or magnetic principle,
and/or an ultrasonic sensor
and/or an optical sensor.

10. Sensor according to one of the preceding claims, wherein the sensor is a sensor for measuring the filling level
and/or for determining the distance
and/for determining the pH value
and/or for determining a substance concentration.

11. Sensor according to one of the preceding claims, wherein the sensor uses a plurality of operating principles in combination and/or measures a plurality of physical and/or chemical variables.

12. Method for operating a sensor according to Claim 1, wherein the method has the following steps:
- the sensor stores tasks to be performed, wherein each task is assigned at least one subtask and at least one temporal implementation specification, in particular in the form of a point in time or a time window, for implementing the task,
- in the memory stored tasks are analyzed with respect to their combinability and combinable tasks are identified by checking which of the tasks can be implemented at the same time, in an overlapping manner or immediately after one another in terms of time according to the temporal implementation specification and also have identical subtasks, and regarding those tasks which satisfy both criteria to be combinable, and
- combinable tasks are used to form modified tasks which replace the respective original tasks during implementation, wherein the modified tasks are formed from the subtasks of the original tasks in such a manner that the modified tasks each have the subtasks of all original tasks, with the exception of subtasks that occur twice or several times, and at the end, change the sensor to a final state which corresponds to the final state defined by at least one of the original tasks.

## Revendications

1. Capteur, le capteur présentant les particularités suivantes :
- une mémoire dans laquelle des tâches à accomplir par le capteur peuvent être mémorisées, chaque tâche étant associée à au moins une tâche partielle et à au moins une spécification d'exécution dans le temps, en particulier sous la forme d'un temps ou d'une fenêtre de temps, pour l'exécution de la tâche, et
- un dispositif de commande séquentielle qui est réalisé
- pour analyser des tâches mémorisées dans la mémoire quant à une capacité de combinaison et pour identifier des tâches pouvant être combinées, en ce qu'il vérifie lesquelles des tâches peuvent être exécutées simultanément, en se chevauchant ou en se suivant directement dans le temps, selon la spécification d'exécution dans le temps, et présentent en outre des tâches partielles identiques, et en ce qu'il considère comme pouvant être combinées des tâches remplissant les deux critères, et
- pour former à partir de tâches pouvant être combinées des tâches modifiées qui remplacent les tâches d'origine respectives lors de l'exécution, les tâches modifiées étant formées à partir des tâches partielles des tâches d'origine de telle sorte que les tâches modifiées présentent respectivement les tâches partielles de toutes les tâches d'origine à l'exception de tâches partielles apparaissant deux ou plusieurs fois, et mettent le capteur finalement dans un état final qui correspond à l'état final défini par au moins l'une des tâches d'origine.

2. Capteur selon la revendication 1, dans lequel le dispositif de commande séquentielle est adapté pour avancer ou retarder l'exécution de tâches dans la mesure où la spécification d'exécution associée à la tâche respective le permet.

3. Capteur selon l'une quelconque des revendications précédentes, dans lequel le dispositif de commande séquentielle est configuré de telle sorte qu'il avance ou retarde l'exécution de tâches en respectant la tolérance temporelle définie dans les spécifications d'exécution des tâches, dans le but de réaliser les tâches modifiées de telle sorte que le nombre des tâches partielles réellement à exécuter soit minimal.

4. Capteur selon l'une quelconque des revendications précédentes, dans lequel le dispositif de commande séquentielle est configuré pour avancer ou retarder l'exécution de tâches en respectant la tolérance définie dans les spécifications d'exécution, dans le but de minimiser le nombre des tâches modifiées.

5. Capteur selon l'une quelconque des revendications précédentes, dans lequel les tâches partielles dans les tâches modifiées sont exécutées les unes après les autres dans le temps.

6. Capteur selon l'une quelconque des revendications précédentes, dans lequel l'ordre des tâches partielles dans les tâches modifiées correspond respectivement à l'ordre des tâches d'origine.

7. Capteur selon l'une quelconque des revendications précédentes, dans lequel le capteur met à disposition une pluralité de tâches partielles prédéfinies qui peuvent être sélectionnées côté utilisateur pour créer et pour mémoriser une tâche.

8. Capteur selon l'une quelconque des revendications précédentes, dans lequel
- le capteur est alimenté par l'intermédiaire d'un dispositif de stockage d'énergie local, en particulier d'une batterie ou d'un accumulateur,
- et/ou la communication est effectuée sans fil, en particulier par une interface radio.

9. Capteur selon l'une quelconque des revendications précédentes, dans lequel le capteur est un capteur fonctionnant selon un principe de fonctionnement électromagnétique, en particulier selon le principe inductif, capacitif ou magnétique, et/ou est un capteur à ultrasons, et/ou est un capteur optique.

10. Capteur selon l'une quelconque des revendications précédentes, dans lequel il s'agit d'un capteur pour mesurer un niveau de remplissage, et/ou pour déterminer une distance, et/ou pour déterminer la valeur de pH, et/ou pour déterminer une concentration de substance.

11. Capteur selon l'une quelconque des revendications précédentes, dans lequel le capteur applique plusieurs principes de fonctionnement en combinaison et/ou mesure plusieurs grandeurs physiques et/ou chimiques.

12. Procédé d'exploitation d'un capteur selon la revendication 1, dans lequel le procédé présente les étapes suivantes :
- le capteur mémorise des tâches à effectuer, chaque tâche étant associée à au moins une tâche partielle et à au moins une spécification d'exécution dans le temps, en particulier sous la forme d'un temps ou d'une fenêtre de temps, pour l'exécution de la tâche,
- des tâches mémorisées dans la mémoire sont analysées quant à leur capacité de combinaison et des tâches pouvant être combinées sont identifiées en ce qu'il est vérifié lesquelles des tâches peuvent être exécutées simultanément, en se chevauchant ou en se suivant directement dans le temps, selon la spécification d'exécution dans le temps, et présentent en outre des tâches partielles identiques, et en ce que les tâches remplissant les deux critères sont considérées comme pouvant être combinées, et
- à partir de tâches pouvant être combinées, des tâches modifiées sont formées qui remplacent les tâches d'origine respectives lors de l'exécution, les tâches modifiées étant formées à partir des tâches partielles des tâches d'origine de telle sorte que les tâches modifiées présentent respectivement les tâches partielles de toutes les tâches d'origine à l'exception de tâches partielles apparaissant deux ou plusieurs fois, et mettent le capteur finalement dans un état final qui correspond à l'état final défini par au moins l'une des tâches d'origine.
